# EUROPEAN PATENT APPLICATION

(11) **EP 2 426 585 A2**
(43) Date of publication of application: **07.03.2012**
(21) Application number: 11175331.5
(22) Date of filing: 26.07.2011
(51) Int. Cl.: G06F 3/048

(54) **Information processing apparatus, information processing method, and computer program.**

(30) Priority: 07.09.2010 JP 2010199637
(71) Applicant: Sony Corporation, Tokyo 108-0075 (JP)
(72) Inventor: Kasahara, Shunichi, Minato-ku, Tokyo 108-0075 (JP); Kano, Ritsuko, Minato-ku, Tokyo 108-0075 (JP); Narita, Tomoya, Minato-ku, Tokyo 108-0075 (JP)
(74) Representative: Lewis, Darren John

(57) **Abstract**

The present disclosure provides an information processing apparatus including: a position information acquisition portion configured to acquire position information about an operating body relative to a display surface of a display portion displaying an object; and a display control portion configured such that if the operating body is positioned inside a proximate region between the display surface and a position withdrawn from the display surface by a predetermined distance, the display control portion displays the object in that position on the display portion which corresponds to the operating body.

## Description

The present disclosure relates to an information processing apparatus, an information processing method, and a computer program. More particularly, the disclosure relates to an information processing apparatus, an information processing method, and a computer program for controlling the display of an apparatus equipped with a touch sensor.

The touch panel offers an intuitive, easy-to-use user interface (UI) and thus has been used in such applications as ticket vendors for public transportation and automatic teller machines (ATM) set up by banks. In recent years, some touch sensors have become capable of detecting users' actions so that they help implement machine operations that were not available with traditional button-based operations. The new capability allows the touch panel to be utilized extensively in such portable apparatuses as mobile phones and video game machines. For example, JP-T-2010-506302 discloses an apparatus which, based on the presence of an object near the input region such as a touch panel of the apparatus, starts tactile feedback before a user touches the input region thus generating tactile effects on the apparatus.

Heretofore, the information about the fingers detectable by traditional touch panels pertained only to the status of the finger or fingers being in contact with the panel surface. Thus before a finger came into contact with the touch panel, the apparatus equipped with the touch sensor was incapable of recognizing what process should be performed in response to the finger touching the touch panel.

Consider the case where the touch screen of a mobile terminal or a touch screen device as large as an A4-size sheet is operated to select one of a plurality of objects being displayed on a display unit of the terminal or the device. In that case, if the object desired to be selected is positioned away from the finger operating the touch screen, then the user may need to extend his or her finger to that position for the selection, which can increase the user's operation load. If the target object is displayed close to the finger, the user's casual finger movement can take the finger away from the object, which can lower manipulation performance.

The present disclosure has been made in view of the above circumstances and provides an information processing apparatus, an information processing method, and a computer program which are novel and improved to alleviate the user's operation load by changing the display position of the object targeted to be manipulated in keeping with the position of an operating body of the user.

Various respective aspects and features of the invention are defined in the appended claims. Combinations of features from the dependent claims may be combined with features of the independent claims as appropriate and not merely as explicitly set out in the claims.

According to one embodiment of the present disclosure, there is provided an information processing apparatus including: a position information acquisition portion configured to acquire position information about an operating body relative to a display surface of a display portion displaying an object; and a display control portion configured such that if the operating body is positioned inside a proximate region between the display surface and a position withdrawn from the display surface by a predetermined distance, the display control portion displays the object in that position on the display portion which corresponds to the operating body.

Preferably, if the operating body is moved out of the proximate region, the display control portion may hide the object displayed when the operating body was positioned inside the proximate region.

Preferably, if the operating body is again positioned inside the proximate region before a predetermined time period elapses following the movement of the operating body out of the proximate region, the display control portion may display the object again in that position on the display portion which corresponds to the operating body in accordance with the position information about the operating body being again positioned inside the proximate region.

Preferably, the position information acquisition portion may be capable of acquiring the position information about a plurality of operating bodies; wherein, based on the position information about a first operating body positioned inside the proximate region, the display control portion may first display the object in that position on the display portion which corresponds to the first operating body; and if a second operating body is positioned inside the proximate region with the object being displayed on the display portion, the display control portion may display part of the object in that position on the display portion which corresponds to the second operating body, based on the position information about the second operating body.

Preferably, the position information acquisition portion may be capable of acquiring the position information about a plurality of operating bodies; wherein, based on the position information about a first operating body positioned inside the proximate region, the display control portion may first display the object in that position on the display portion which corresponds to the first operating body; and if a second operating body is positioned inside the proximate region while the first operating body is in contact with one of sub-objects making up the object, the display control portion may display a related object in that position on the display portion which corresponds to the second operating body, the related object being related to the sub-object in contact with the first operating body.

Preferably, the position information acquisition portion may be capable of acquiring the position information about a plurality of operating bodies; wherein, based on the position information about a first operating body positioned inside the proximate region, the display control portion may first display a plurality of objects in those positions on the display portion which correspond to the first operating body; and if a second operating body is positioned inside the proximate region with the plurality of objects being displayed on the display portion, the display control portion may display at least one of the plurality of objects in that position on the display portion which corresponds to the second operating body.

Preferably, if the operating body is moved at speeds lower than a predetermined speed inside the proximate region, the display control portion may move the display position of the object in keeping with the movement of the operating body.

According to another embodiment of the present disclosure, there is provided an information processing method including: causing a position information acquisition portion to acquire position information about an operating body relative to a display surface of a display portion displaying an object; and if the operating body is positioned inside a proximate region between the display surface and a position withdrawn from the display surface by a predetermined distance, then causing a display control portion to display the object in that position on the display portion which corresponds to the operating body.

According to a further embodiment of the present disclosure, there is provided a computer program for causing a computer to function as an information processing apparatus including: a position information acquisition portion configured to acquire position information about an operating body relative to a display surface of a display portion displaying an object; and a display control portion configured such that if the operating body is positioned inside a proximate region between the display surface and a position withdrawn from the display surface by a predetermined distance, the display control portion displays the object in that position on the display portion which corresponds to the operating body.

The program is stored in a storage device attached to the computer. When retrieved from the storage device and executed by the CPU of the computer, the program allows the computer to function as the above-outlined information processing apparatus. There is also provided a computer-readable recording medium on which the program may be recorded. For example, the recording medium may be magnetic disks, optical disks, or MO (Magneto-Optical) disks. The magnetic disks may typically include a hard disk and a disk-like magnetic body. The optical disks may include CD (Compact Disc), DVD-R (Digital Versatile Disc Recordable), and BD (Blu-Ray Disc (registered trademark)).

As outlined above, the present disclosure provides an information processing apparatus, an information processing method, and a computer program for alleviating the user's operation load by changing the display position of the object targeted to be manipulated in keeping with the position of an operating body of the user.

Further advantages of the present disclosure will become apparent upon a reading of the following description and appended drawings in which like parts are referred to by like references, and in which:
Fig. 1 is a block diagram showing a typical hardware structure of an information processing apparatus as an embodiment of the present disclosure;
Fig. 2 is a schematic view explanatory of the typical hardware structure of the information processing apparatus as the embodiment of the disclosure;
Fig. 3 is a schematic view explanatory of typical states in which the information processing apparatus may be used;
Fig. 4 is a schematic view explanatory of how an object may appear when a finger approaches the display region of a horizontally-held information processing apparatus from the left-hand side thereof;
Fig. 5 is a schematic view explanatory of how an object may appear when a finger approaches the display region of a vertically-held information processing apparatus from the bottom side thereof;
Fig. 6 is a block diagram showing a typical functional structure of the information processing apparatus as the embodiment of the disclosure;
Fig. 7 is a flowchart showing an object appearance position control process performed by the information processing apparatus as the embodiment of the disclosure;
Fig. 8 is a schematic view explanatory of a specific object appearance position control process performed by the information processing apparatus as the embodiment of the disclosure;
Fig. 9 is a flowchart showing an object appearance position control process performed by the information processing apparatus when two or more proximate finger detection positions are detected;
Fig. 10 is a schematic view explanatory of a specific object appearance position control process performed by the information processing apparatus when two or more proximate finger detection positions are detected;
Fig. 11 is a schematic view explanatory of a typical process by which a related object corresponding to the position of a finger contacting an object may be displayed;
Fig. 12 is a schematic view explanatory of a typical process by which a plurality of objects may be displayed separately in a plurality of proximate finger detection positions;
Fig. 13 is a schematic view explanatory of a typical process by which the display position of an object may be changed in keeping with finger movements;
Fig. 14 is a schematic view explanatory of an example in which the object appearance position control process performed by the information processing apparatus when two or more proximate finger detection positions are detected is utilized in conjunction with a drawing application; and
Fig. 15 is a schematic view explanatory of how the display position of an object may be changed in keeping with the movement of the finger that caused the object to appear.

Some preferred embodiments of the present disclosure will now be described in detail in reference to the accompanying drawings. Throughout the ensuing description and the appended drawings, like reference numerals designate like or corresponding parts, and their explanations will be omitted where redundant.

The ensuing description will be given under the following headings:
1. Overview of the information processing apparatus;
2. Functional structure of the information processing apparatus; and
3. Object appearance position control process.

### <1. Overview of the information processing apparatus>

### [Typical hardware structure]

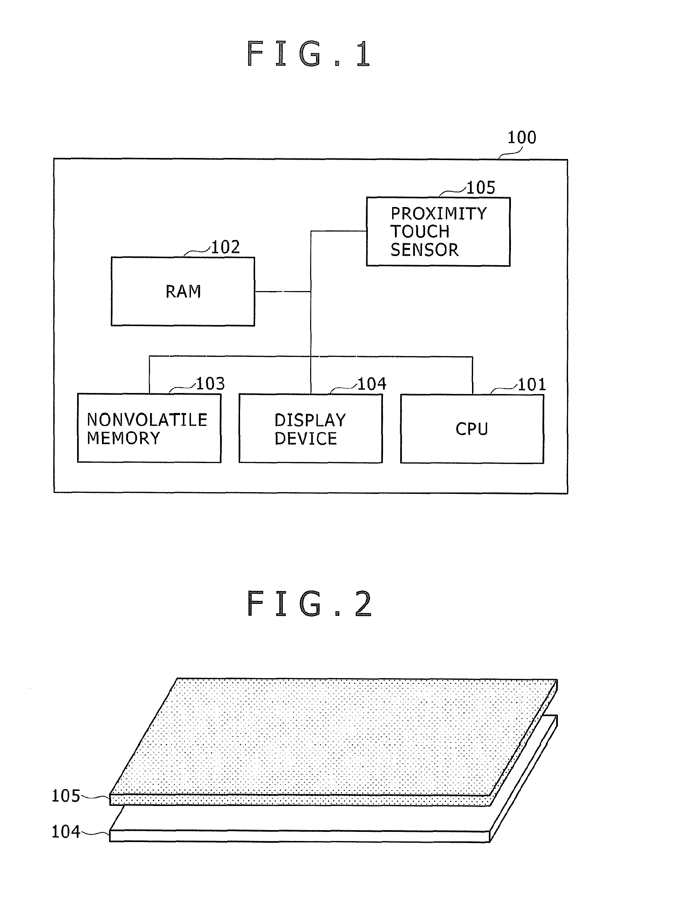

A typical hardware structure of an information processing apparatus embodying the present disclosure is explained below in reference to Figs. 1 and 2. Fig. 1 is a block diagram showing a typical hardware structure of the information processing apparatus 100 as one embodiment of the disclosure. Fig. 2 is a schematic view explanatory of the typical hardware structure of the information processing apparatus 100 embodying this disclosure.

The information processing apparatus 100 of this embodiment is furnished with a detection portion which can detect the contact position of an operating body touching a display surface of a display device of the apparatus and which can also detect a proximate distance between the display surface of the display device and the operating body positioned above the display surface. Diverse kinds of apparatuses with diverse capabilities may function as the information processing apparatus 100. For example, such apparatuses may include portable information terminals and apparatuses such as smart phones each equipped with a small display device.

As shown in Fig. 1, the information processing apparatus 100 embodying this disclosure includes a CPU 101, a RAM (random access memory) 102, a nonvolatile memory 103, a display device 104, and a proximity touch sensor 105.

The CPU 101 functions as an arithmetic processing unit and a controller controlling the overall performance of the components constituting the information processing apparatus 100 in accordance with various programs. Alternatively, the CPU 101 may be a microprocessor. The RAM 102 temporarily stores the programs used by the CPU 101 during process execution as well as parameters and other data being changed in the course of the execution. These components are interconnected via a host bus generally composed of a CPU bus. The nonvolatile memory 103 stores the programs, operation parameters, and other resources for use by the CPU 101. For example, a ROM (read only memory) or a flash memory may be utilized as the nonvolatile memory 103.

The display device 104 is a typical output device that outputs information. For example, a liquid crystal display (LCD) device or an OLED (organic light-emitting diode) device may be utilized as the display device 104. The proximity touch sensor 105 is a typical input device through which a user inputs information. The proximity touch sensor 105 is made up, among others, of an input portion for inputting information, and an input control circuit that generates input signals based on the input from the user and outputs the generated signals to the CPU 101.

On the information processing apparatus embodying this disclosure, the proximity touch sensor 105 is attached in layered relation to the display surface of the display device 104, as shown in Fig. 2. The proximity touch sensor thus furnished permits detection of the distance between the display surface and the user's finger approaching the display surface.

### [Concept of the appearance position control process through GUI]

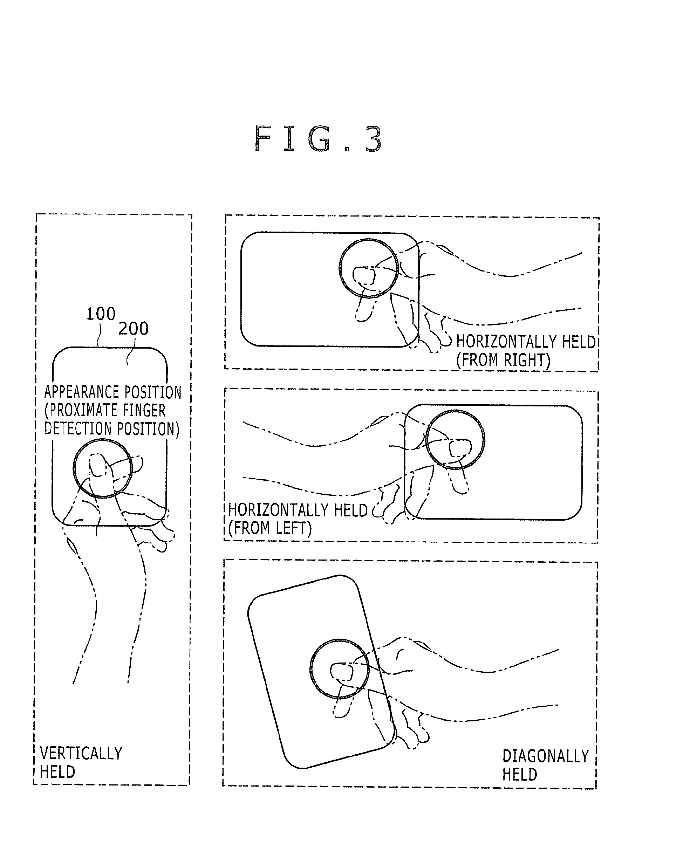

The information processing apparatus 100 embodying this disclosure displays a GUI (graphical user interface) in keeping with that position in a display region of the apparatus which is approached or touched by an operating body such as the user's finger. For example, if the information processing apparatus 100 is a mobile device, the user may hold a rectangular display region 200 of the device vertically or horizontally for use as shown in Fig. 3.

If the mobile device is oriented vertically for use, the user may hold the device at the bottom and extend his or her finger from the bottom upward to manipulate the GUI such as a displayed object. If the mobile device is oriented horizontally for use, the user may hold the device on the right or left side and extend the finger laterally to manipulate the object displayed in the display region 200. Alternatively, the user may hold the mobile device diagonally and extend the finger in an easy-to-hold manner to manipulate the displayed object in the display region 200. That is, the mobile device may be held in various ways.

The information processing apparatus 100 is capable of changing the display position of the GUI in the display region 200 by running suitable software. This information processing apparatus 100 embodying the disclosure displays the GUI in accordance with the position of the operating body such as the finger manipulating the GUI displayed in the display region 200, thereby permitting intuitive operations alleviating the user's operation load. In the example of Fig. 3, the GUI is caused to appear in the position where the approach of a finger is detected (i.e., a proximate finger detection position). This arrangement makes it possible to display the GUI to be manipulated in the proximate finger detection position for higher manipulation performance, without the user having to become aware of the orientation of the apparatus in operation or the position of the finger manipulating the GUI.

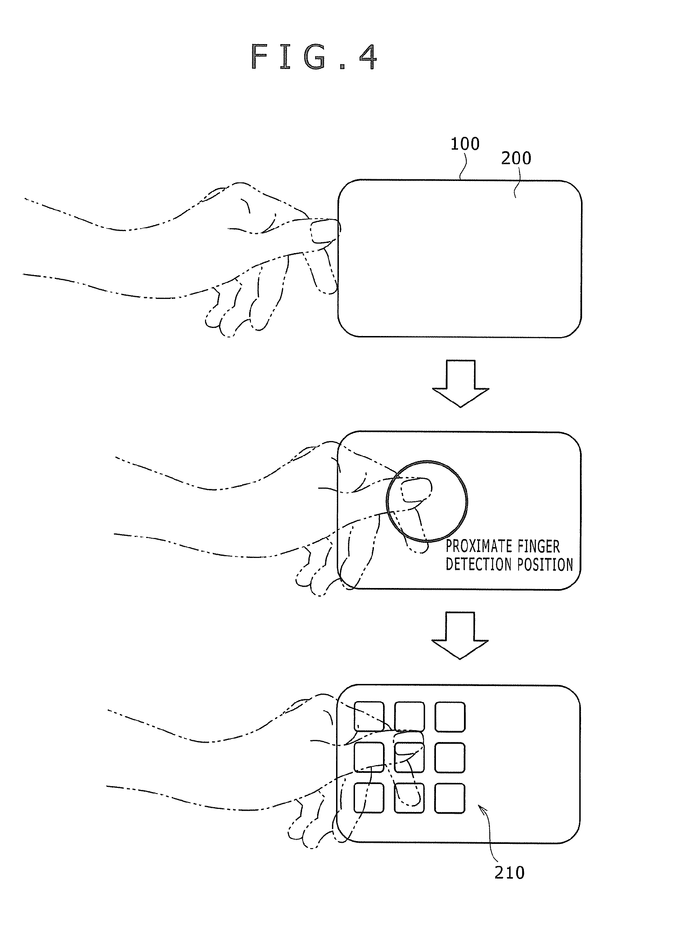

More specifically, as shown illustratively in Fig. 4, suppose that the information processing apparatus 100 is horizontally held for use and that the finger for manipulating the displayed object in the display region 200 approaches from the left side of the apparatus. In such a case, the information processing apparatus 100 detects the approach of the finger to the display region 200 using the proximity touch sensor 105, determines the proximate finger detection position, and displays an object 210 in the proximate finger detection position thus determined in the display region 200. In Fig. 4, the object 210 is displayed on the left side of the display region 200.

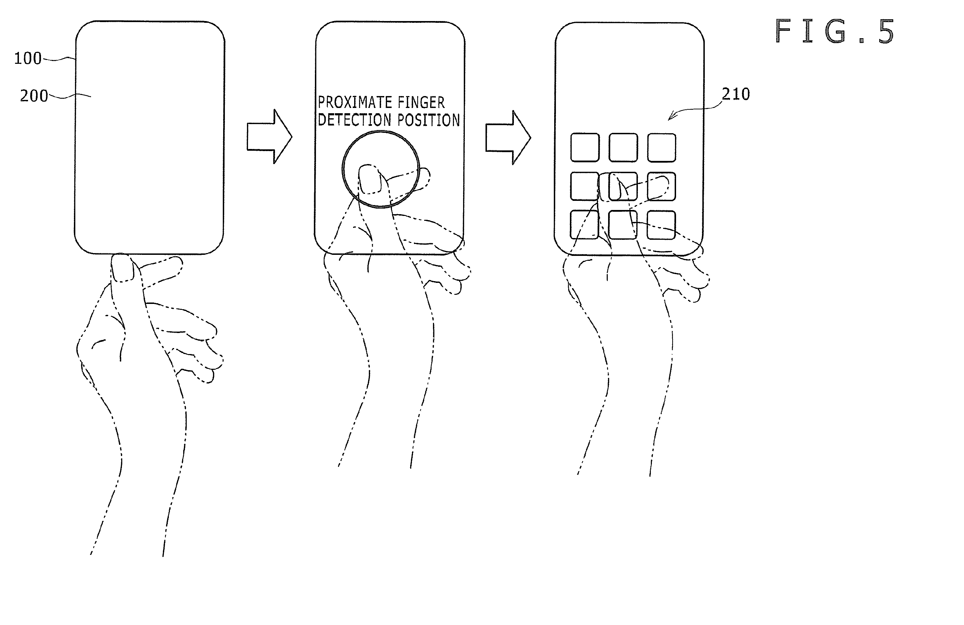

On the other hand, suppose now that the finger for manipulating the object displayed in the display region 200 approaches from the bottom side of the apparatus as shown in Fig. 5. In this case, the information processing apparatus 100 detects the approach of the finger to the display region 200 using the proximity touch sensor 105, determines the proximate finger detection position, and displays the object 210 in the proximate finger detection position thus determined in the display region 200. In Fig. 5, the object 210 is displayed on the lower side of the display region 200.

When the GUI to be manipulated is displayed as described in the proximate finger detection position where the approaching finger is detected, manipulation performance is enhanced. Explained below in detail are the workings of the information processing apparatus 100 furnished with a control portion for controlling the GUI appearance position in keeping with the position of the finger approaching the display region 200, together with a GUI appearance position control process performed by the apparatus 100.

### <2. Functional structure of the information processing apparatus>

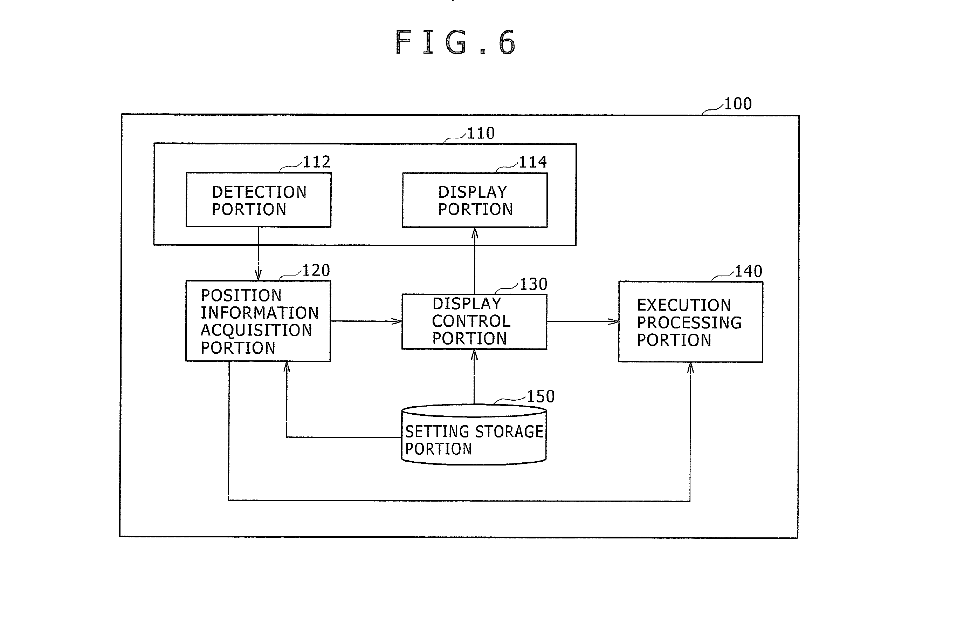

The functional structure of the information processing apparatus 100 embodying this disclosure is first explained below in reference to Fig. 6. Fig. 6 is a block diagram showing a typical functional structure of the information processing apparatus 100 as the embodiment of the disclosure.

As shown in Fig. 6, the information processing apparatus 100 embodying this disclosure includes an input display section 110, a position information acquisition portion 120, a display control portion 130, an execution processing portion 140, and a setting storage portion 150.

The input display section 110 is a functional portion that displays as well as inputs information. As such, the input display section 110 is made up of a detection portion 112 and a display portion 114. The detection portion 112 corresponds to the proximity touch sensor 105 shown in Fig. 1 and may be implemented using an electrostatic touch panel for example. In this case, the detection portion 112 detects the value of electrostatic capacitance that varies depending on the proximate distance between the operating body and a display surface of the display portion 114.

When the operating body comes within a predetermined distance to the display surface, the electrostatic capacitance detected by the detection portion 112 increases. When the operating body approaches closer to the display surface, the electrostatic capacitance increases further. When the operating body comes into contact with the display surface, the electrostatic capacitance detected by the detection portion 112 is maximized. On the basis of the value of the electrostatic capacitance thus detected by the detection portion 112, the position information acquisition portion 120 (to be discussed later) can acquire the position information about the operating body relative to the display surface of the display portion 114. The detection portion 112 outputs the detected capacitance value to the position information acquisition portion 120 as the result of the detection.

The display portion 114 is an output device that displays information and corresponds to the display device 104 shown in Fig. 1. For example, the display portion 114 may display a GUI object and the content of an object related to that object. If the manner in which an object is displayed by the display control portion 130 is changed, then the display portion 114 displays the changed object on the basis of object display change information given by the display control portion 130.

Based on the result of the detection input from the detection portion 112, the position information acquisition portion 120 acquires position information indicative of the positional relation between the operating body and the display surface of the display portion 114. As described above, the larger the value of the electrostatic capacitance detected by the detection portion 112, the closer the operating body to the display surface. When the operating body comes into contact with the display surface, the electrostatic capacitance value is maximized. The relations of correspondence between the electrostatic capacitance value and the proximate distance (or the proximate detection region) are stored beforehand in the setting storage portion 150, to be discussed later. Given the electrostatic capacitance value input from the detection portion 112, the position information acquisition portion 120 acquires the position of the user's finger in the vertical direction (i.e., z direction) relative to the display surface by referencing the setting storage portion 150.

Also, based on the result of the detection input from the detection portion 112, the position information acquisition portion 120 determines the position of the operating body on the display surface (i.e., x-y plane) of the display portion 114. For example, suppose that the detection portion 112 is formed by an electrostatic sensor substrate furnished with an electrostatic detection grid for detecting x and y coordinates. In such a case, the detection portion 112 can determine the position of the operating body relative to the substrate (i.e., display surface) based on changes in the electrostatic capacitance of each of the grid pieces in contact with the operating body. For example, the coordinate position where the electrostatic capacitance is the highest may be determined to be the coordinate position where the finger is the closest to the display surface. Alternatively, the position of the center of gravity of the region where an electrostatic capacitance value higher than a predetermined level is detected may be determined to be the coordinate position where the finger is the closest to the display surface.

In the manner described above, the position information acquisition portion 120 may acquire the position information with regard to the display surface of the display portion 114. The acquired position information about the operating body is output to the display control portion 130 and to the execution processing portion 140.

The display control portion 130 controls the display position of the object on the display portion 114 in accordance with the position information acquired by the position information acquisition portion 120. As discussed above in reference to Figs. 3 through 5, the display control portion 130 controls the appearance position of the object 210 displayed on the display portion 114 in keeping with the proximate position of the user's finger in such a manner as to let the user manipulate the object 210 displayed on the display portion 114. After determining the appearance position of the object 210, the display control portion 130 generates an image of the object 210 and outputs the generated image to the display portion 114. If the proximate position of the finger is varied in keeping with finger movements, the display control portion 130 changes the display position of the object 210 in accordance with changes in the finger's proximate position. The display control portion 130 can also perform display control upon receipt of an instruction from the execution processing portion 140 (to be discussed later) to change the content of the object 210 displayed in the contact position of the finger.

In response to an operation input to the information processing apparatus 100, the execution processing portion 140 performs the function related to the operation input in question. For example, if the detection portion 112 detects the user's finger touching a given object 210 displayed on the display portion 114, the execution processing portion 140 recognizes the finger contacting the object 210 based on the position information input from the position information acquisition portion 120. The execution processing portion 140 then determines the object 210 touched by the finger and carries out the function associated with the object 210.

The setting storage portion 150 stores as setting information the settings used for calculating the proximate distance between the operating body and the display surface, for generating the position information about the operating body relative to the display surface, and for performing the object appearance position control process, among others. For example, the setting storage portion 150 may store the relations of correspondence between the electrostatic capacitance value and the proximate distance. By referencing such correspondence relations, the position information acquisition portion 120 can acquire the position corresponding to the electrostatic capacitance value input from the detection portion 112. Also, the setting storage portion 150 may store the process contents (i.e., functions) to be executed in response to the operation inputs made by the user to the object 210. The setting information may be stored beforehand in the setting storage portion 150 or may later be stored therein by the user.

As another alternative, the information processing apparatus 100 embodying this disclosure may be provided with a memory or the like for temporarily storing information necessary for carrying the object display position control process and other processes.

### <3. Object appearance position control process>

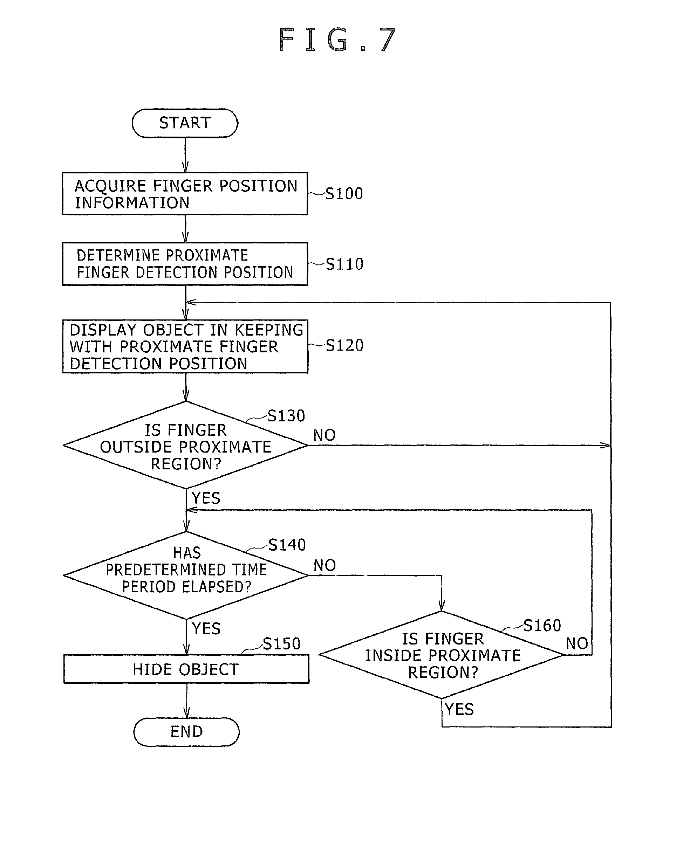

Furnished with the above-described capabilities, the information processing apparatus 100 embodying this disclosure can detect the proximate position of the finger relative to the display surface (i.e., proximate finger detection position). Based on the proximate finger detection position thus acquired, the information processing apparatus 100 controls the appearance position of the object 210 displayed on the display portion 114 in a manner enhancing manipulation performance. Described below in reference to Figs. 7 through 14 is the object appearance position control process performed by the information processing apparatus 100 embodying this disclosure.

### [Object appearance position control: basic processing]

Explained first is the basic processing of object appearance position control performed by the information processing apparatus 100.

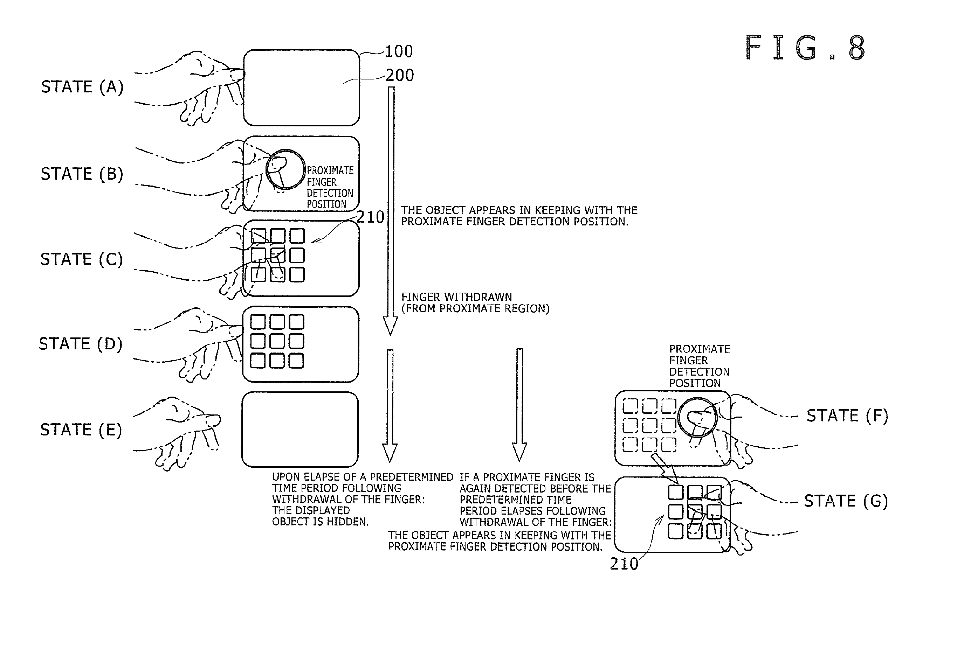

Fig. 7 is a flowchart showing the object appearance position control process performed by the information processing apparatus 100 embodying the disclosure. Fig. 8 is a schematic view explanatory of a specific object appearance position control process performed by the information processing apparatus 100.

First, the information processing apparatus 100 acquires the position information about the user's finger by use of the detection portion 112 (in step S100). If the detection portion 112 is an electrostatic touch panel for example, the detection portion 112 detects the electrostatic capacitance value that varies depending on the proximate distance between the finger and the display surface of the display portion 114. Based on the result of the detection from the detection portion 112, the position information acquisition portion 120 acquires the finger's proximate position relative to the display surface as the position information. Of the fingers in the proximity of the display surface, the finger that is the closest to the display surface is identified by the position information acquisition portion 120 and the position of that finger is output to the display control portion 130 as the proximate finger detection position (in step S110). The position of the finger closest to the display surface may be determined to be the position where the electrostatic capacitance value is maximized in accordance with the result of the detection from the detection portion 112.

For example, as shown in Fig. 8, suppose that the information processing apparatus 100 is horizontally held for use. In this case, the finger is not positioned on the display surface in state (A) so that there is no change in the value detected by the detection portion 112. When the finger subsequently approaches the display surface from the left side of the information processing apparatus 100, there occur changes in the value detected by the detection portion 112, allowing the position information acquisition portion 120 to determine the proximate finger detection position (in state (B)).

Given the input of the proximate finger detection position, the display control portion 130 displays a relevant object 210 in the display region 200 in accordance with the input position (in step S120). For example, the display control portion 130 may display the object 210 in such a manner that the center of the object 210 coincides with the proximate finger detection position. Alternatively, the display control portion 130 may display the object 210 near a first proximate finger detection position so that the object 210 will not be hidden by the finger. If it is determined that the proximate finger detection position is on the left side of the apparatus as in state (B) of Fig. 8, the object 210 may be displayed on the left side of the display area 200 (i.e., on the left side of the apparatus) as shown in state (C). In this manner, the appearance position of the object 210 is determined in keeping with the position of the approaching finger.

Thereafter, the display control portion 130 determines whether the finger has moved out of a proximate region based on the position information input from the position information acquisition portion 120 (in step S130). The proximate region is a region between the display surface and the position at a predetermined distance away from the display surface. For example, the proximate region may be the region where the finger's position information can be acquired by the detection portion 112. When it is determined that the finger is positioned within the proximate region, the display control portion 130 keeps the object 210 displayed.

If it is determined that the finger is positioned outside the proximate region, the display control portion 130 starts counting the time that elapses after the withdrawal of the finger from the proximate region. The display control portion 130 determines whether a predetermined time period has elapsed (in step S140). Upon elapse of the predetermined time period, the display control portion 130 hides the object 210 that was displayed in the display region 200. If the predetermined time period has not elapsed yet, the display control portion 130 again determines whether the finger is again positioned inside the proximate region (in step S160). If it is determined that the finger is absent from the proximate region, the display control portion 130 returns to step S140 and continues counting the elapsed time after the withdrawal of the finger from the proximate region.

On the other hand, if it is determined that the finger was withdrawn from the proximate region but has been moved again thereinto before the predetermined time period elapses, then the display control portion 130 displays the object 210 in a newly detected proximate finger detection position (in step S120). At this point, the display control portion 130 stops counting the elapsed time after the finger was positioned inside the proximate region and resets the count. The display control portion 130 then repeats step S120 and subsequent steps. The elapsed time may be preset or may be established as desired by the user.

In the example of Fig. 8, the finger is first withdrawn from the proximate region in state (D). In this case, the display control portion 130 starts counting the elapsed time the moment the finger is positioned outside the proximate region. Unless the finger again moves back into the proximate region within a predetermined time period, the display control portion 130 at the end of the predetermined time period hides the object 210 being displayed in the display region 200, as shown in state (E). If it is determined that the finger is again positioned in the proximate region before the predetermined time period elapses as in state (F), then the display control region 130 moves the object 210 displayed in the display region 200 into the newly detected proximate finger detection position (in state (G)). In this manner, the appearance position of the object 210 in the display region 200 is changed in keeping with the proximate finger detection position. With the object 210 displayed automatically in the position of the finger for manipulating the object 210, manipulation performance is enhanced.

### [Object appearance position control: when two or more proximate finger detection positions are detected]

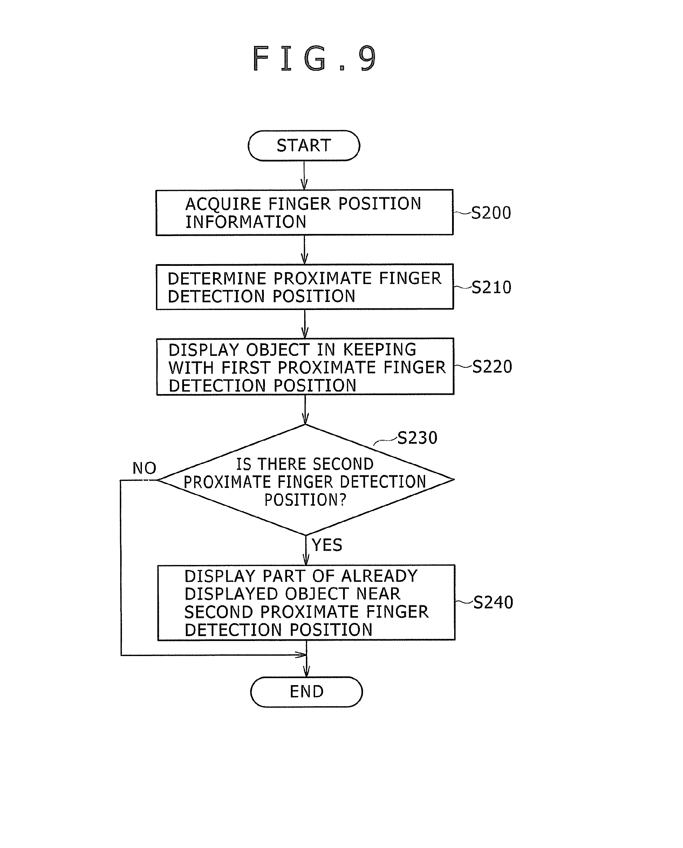

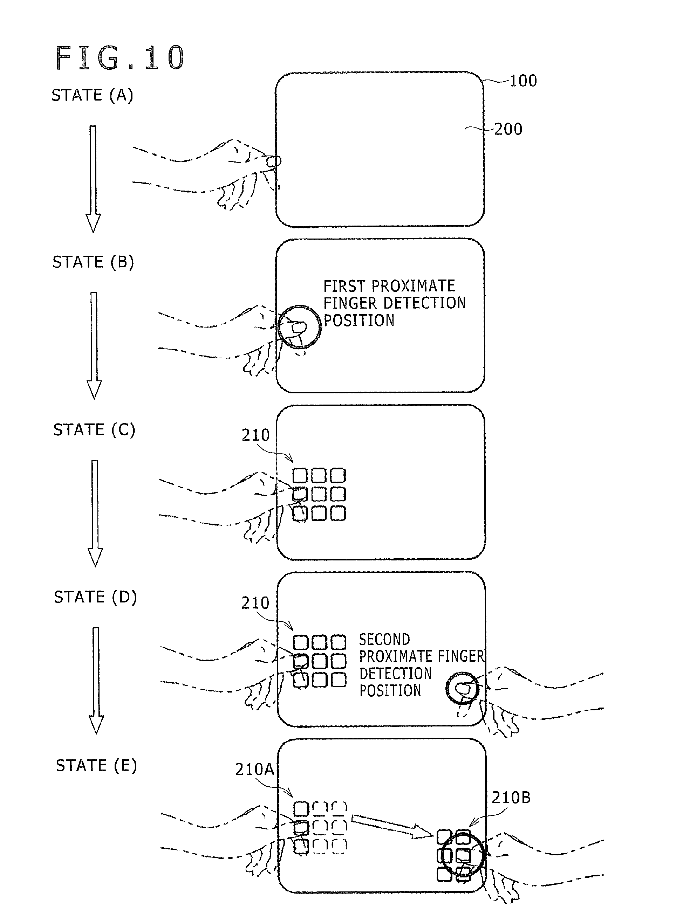

Described below in reference to Figs. 9 and 10 is the object appearance position control process performed by the information processing apparatus 100 when two or more proximate finger detection positions are detected. In this case, it is assumed that the detection portion 112 of the information processing apparatus 100 is capable of detecting a plurality of proximate or contact positions relative to the display surface. If a plurality of proximate or contact positions are detected, the information processing apparatus 100 recognizes the presence of multiple fingers for manipulating the object and thus divides the object for piece-by-piece display of the divided object in the proximate finger detection positions involved. This makes it possible for the multiple fingers to manipulate the target object and thereby alleviate the user's operation load. Since the pieces making up the object can be manipulated simultaneously by the multiple fingers, an appreciably higher speed of manipulation is expected.

Fig. 9 is a flowchart showing the object appearance position control process performed by the information processing apparatus 100 when two or more proximate finger detection positions are detected. Fig. 10 is a schematic view explanatory of a specific object appearance position control process carried out by the information processing apparatus 100 when two or more proximate finger detection positions are detected. In the ensuing description, like reference numerals designate like or corresponding steps discussed above in reference to Figs. 7 and 8, and their detailed explanations will be omitted.

In this example, as in the basic processing discussed above, the information processing apparatus 100 first acquires finger position information by use of the detection portion 112 (in step S200). Based on the result of the detection from the detection portion 112, the position information acquisition portion 120 acquires the proximate positions of the fingers relative to the display surface as the position information. Of the fingers proximate to the display surface, the finger closest to the display surface is identified by the position information acquisition portion 120 and the position of that finger is output therefrom to the display control portion 130 as a first proximate finger detection position (in step S210).

For example, suppose that the information processing apparatus 100 is horizontally held for use as shown in Fig. 10. In state (A), no finger is positioned on the display surface so that there is no change in the value detected by the detection portion 112. When a finger subsequently approaches the display surface from the left side of the information processing apparatus 100, there occur changes in the value detected by the detection portion 112, and the position information acquisition portion 120 identifies the first proximate finger detection position (in state (B)).

Given the input of the first proximate finger detection position, the display control portion 130 displays a relevant object 210 in the display region 200 in accordance with the first proximate finger detection position (in step S220). For example, the display control portion 130 may display the object 210 in such a manner that the center of the object 210 coincides with the first proximate finger detection position. If it is determined that the first proximate finger detection position is on the left side of the apparatus as in state (B) of Fig. 10, the object 210 may be displayed on the left side of the display area 200 (i.e., on the left side of the apparatus) as shown in state (C). In this manner, the appearance position of the object 210 is determined in keeping with the position of the approaching finger.

Steps S200 through S220 are carried out in the same manner as steps S100 through S120 shown in Fig. 7.

Thereafter, while the object 210 displayed in keeping with the first proximate finger detection position is inside the display region 200, the display control portion 130 determines whether a new proximate finger detection position is identified (in step S230). If a new proximate finger detection position is detected while the finger in the first proximate detection position is inside the proximate region, another finger for manipulating the object 210 is presumed to have appeared. In this case, the position information acquisition portion 120 identifies the new proximate finger detection position from the position information and outputs the newly identified position as a second proximate finger detection position to the display control portion 130. The display control portion 130 divides the object 210 currently displayed in the first proximate finger detection position and displays a part of the object 210 in the second proximate finger detection position.

For example, suppose that an object 210 composed of three-by-three sub-objects arrayed in grid-like fashion is displayed in the first proximate finger detection position on the left side of the apparatus and that a second proximate finger detection position is detected on the right side of the apparatus, as shown in state (D) of Fig. 10. In this case, the display control portion 130 may move, say, two columns of the sub-objects constituting the object 210 and located on the side of the second proximate finger detection position from the first proximate finger detection position to the second proximate finger detection position. This brings about state (E) in which the object 210 is divided into two objects 210A and 210B, the object 210A being displayed in the first proximate finger detection position and the object 210B in the second proximate finger detection position.

The objects 210A and 210B may be displayed either in the respective centers of the first and the second proximate finger detection positions, or close to the respective proximate finger detection positions.

The position in which the object 210 is divided may be preset for the object 210 or established by the display control portion 130 in keeping with the proximate finger detection position. For example, if two proximate finger detection positions being detected are arrayed in the horizontal direction of the apparatus as in state (D) of Fig. 10, the object 210 may be divided into a right-hand and a left-hand sub-object. If two proximate finger detection positions currently detected are arrayed in the vertical direction of the apparatus, the object 210 may be dived into an upper and a lower sub-object.

When the object 210 is divided so that a part of it is moved to a newly detected proximate finger detection position as in state (E) of Fig. 10, the user can intuitively recognize that the object 210 has been divided and that a part of it has been moved to the finger detection position detected anew. Where three or more proximate finger detection positions are detected, the object 210 may be divided so that parts of it may be moved from the current position to the other detected proximate finger detection positions.

The foregoing has been the description of the object appearance position control process performed by the information processing apparatus 100 when two or more proximate finger detection positions are detected. As described, when a plurality of proximate finger detection positions are detected, the object 210 currently displayed in the display region 200 is divided so that part of the divided object 210 is displayed in the newly detected proximate finger detection position. That is, if the load involved in manipulating the target object with one finger is thought to be inordinately large, the object may be divided and its pieces handled using a plurality of fingers in distributed fashion, whereby the operation load is alleviated. Also, with multiple fingers manipulating the object simultaneously, the speed of manipulation is expected to be improved.

Alternatively, it is possible explicitly to drag-and-drop the currently displayed object 210 using another finger in order to establish the relation of correspondence to the other finger. The drag-and-dropped object 210 may then be moved close to the other finger in a manner tracking that finger.

### [Display of a related object corresponding to the contact position regarding the target object]

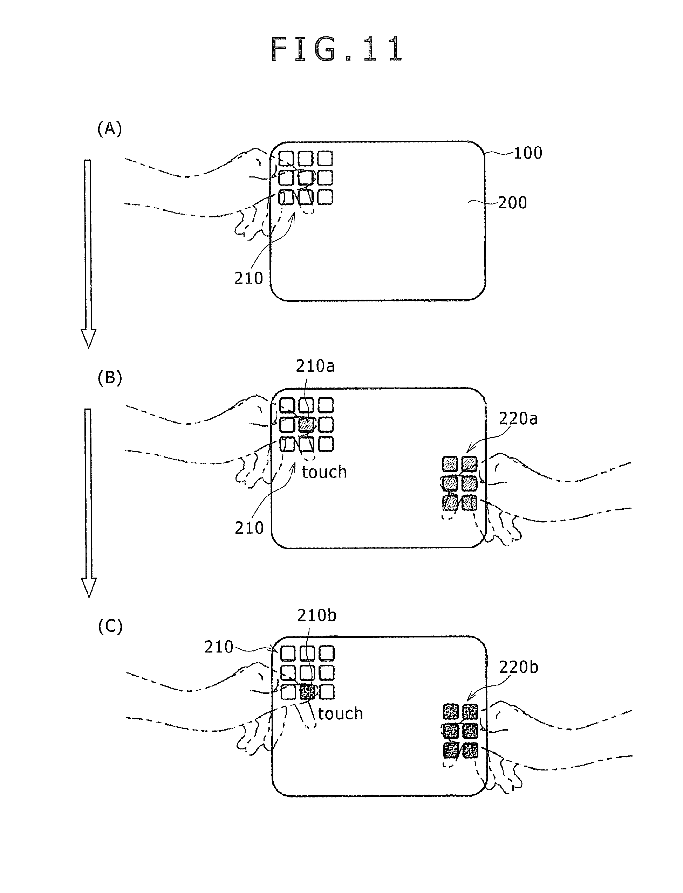

In the examples explained above, it was explained that where two or more proximate finger detection positions are detected, the object shown currently displayed in Figs. 9 and 10 is divided and a part of the divided object is displayed in the newly detected proximate finger detection position. As another example of display control in which two or more proximate finger detection positions are detected, the content of part of the object to be displayed in the newly detected proximate finger detection position may be varied depending on the contact position regarding the object 210 displayed in the display region 200. Fig. 11 shows a typical process by which a related object corresponding to the position of the finger contacting the object 210 is displayed.

State (A) in Fig. 11 is a state in which the steps up to step S220 in Fig. 9 have been carried out so that the object 210 is displayed in the first proximate finger detection position. Each of the sub-objects making up the object 210 is associated with a related object. A given related object is displayed in a proximate finger detection position in which a finger touching the corresponding sub-object is detected anew.

For example, if the finger touching a sub-object 210a of the object 210 currently displayed in the first proximate finger detection position is detected as shown in state (B) of Fig. 11, the display control portion 130 detects a new proximate finger detection position. Upon detecting the new proximate finger detection position, the display control portion 130 displays in the newly detected position a related object 220a associated with the sub-object 210a. When the finger touching the sub-object 210b of the object 210 displayed in the first proximate finger detection position is detected, the display control portion 130 detects a new proximate finger detection position, as shown in state (C) of Fig. 11. Upon detecting the new proximate finger detection position, the display control portion 130 displays a related object 220b associated with the sub-object 210b.

When a related object associated with the sub-object touched by a finger is displayed in a new proximate finger detection position detected following the first proximate finger detection position, it is possible to manipulate the related object using the finger in the newly detected proximate finger detection position. Where the load involved in manipulating the target object with one finger is thought to be inordinately large, the object may be divided and its pieces handled using a plurality of fingers in distributed fashion. This alleviates the operation load. Also, because multiple fingers are used to manipulate the object simultaneously, the speed of manipulation is expected to be improved.

### [Separated display of multiple objects]

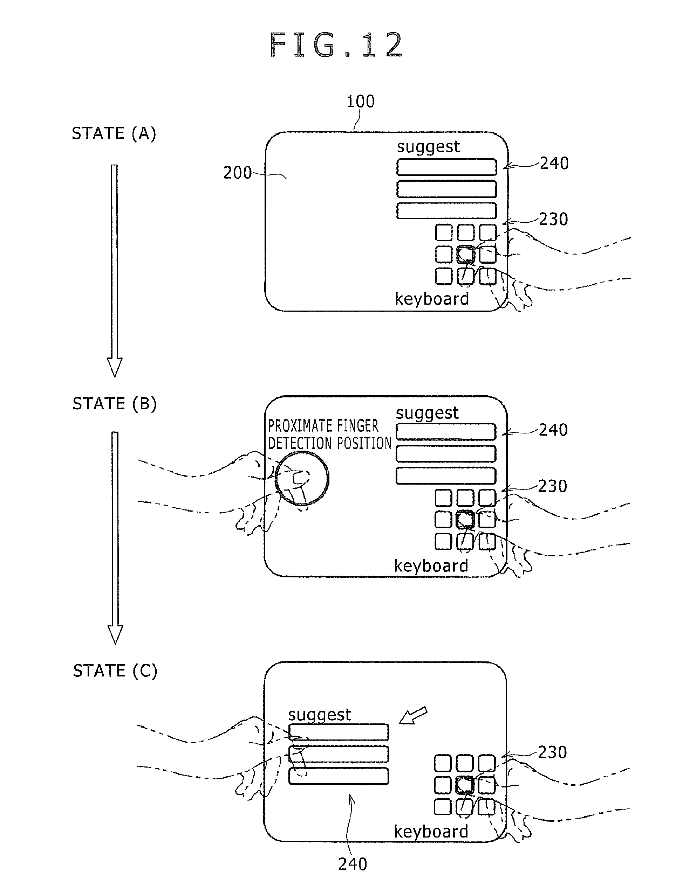

As another example of display control in which two or more proximate finger detection positions are detected, a plurality of objects displayed in the display region 200 may be displayed separately in a plurality of proximate finger detection positions. Fig. 12 shows a typical process by which a plurality of objects are displayed separately in a plurality of proximate finger detection positions.

In the example of Fig. 12, the display region 200 displays a keyboard object (called the keyboard hereunder) 230 for character input and an input suggestion object (called the suggestion hereunder) 240 indicating a row of characters predicted from a series of characters input through the keyboard 230. When characters are input in a row from the keyboard 230, the information processing apparatus 100 references accordingly a dictionary database and a history of previously input series of characters and displays a row of predicted characters in the suggestion 240. The user can input the row of predicted characters by touching the predicted character row displayed in the suggestion 240, which alleviates the operation load involved.

The keyboard 230 and suggestion 240 are displayed in keeping with the proximate finger detection position initially detected, as shown in state (A) of Fig. 12. In this case, the user performs two kinds of input: input of characters from the keyboard 230 using the finger touching the initially detected proximate finger detection position, and input for selecting the row of predicted characters from the suggestion 240. When a second proximate finger detection position is detected, the display control portion 130 moves either the keyboard 230 or the suggestion 240 to the newly detected proximate finger detection position. For example, if a new proximate finger detection position is detected on the left side of the apparatus as shown in state (B) of Fig. 12, then the display control portion 130 may move the suggestion 240 to the newly detected proximate finger detection position as indicated in state (C).

Thereafter, one finger may be used to input characters through the keyboard 230 and another finger may be utilized to select the row of predicted characters displayed in the suggestion 240. Where it is possible to use both hands to manipulate the apparatus, the operation load involved can be alleviated and the speed of manipulation improved.

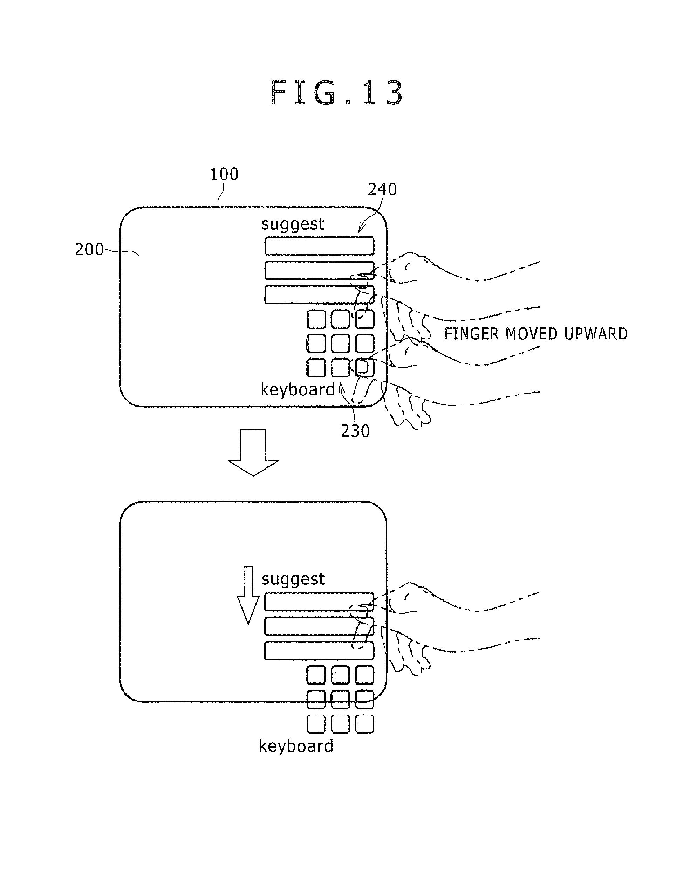

Alternatively, the display position of the object in state (A) of Fig. 12 may be varied depending on the finger movement so that the input with the single finger can still be facilitated as shown in Fig. 13. For example, as illustrated in the upper part of Fig. 13, suppose that the finger in the proximate finger detection position is moved upward from the keyboard 230 in order to select the row of predicted characters displayed in the suggestion 240. In this case, the display control portion 130 moves the keyboard 230 and suggestion 240 downward whereas the finger is shifted upward. This brings the suggestion 240 to be manipulated closer to the finger for easier manipulations aimed at character row selection.

### [Utilization of the object appearance position control process in a drawing application]

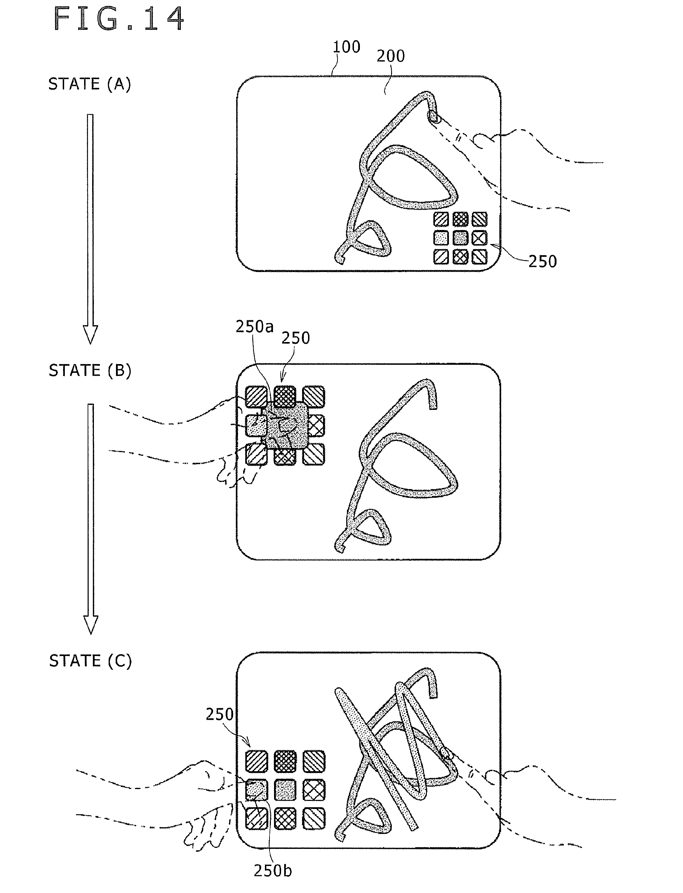

As yet another example of display control in which two or more proximate finger detection positions are detected, the information processing apparatus 100 may be utilized to run a drawing application that allows the finger touching the display surface to make drawings. Fig. 14 shows an example in which the object appearance position control process performed by the information processing apparatus 100 when multiple proximate finger detection positions are detected is utilized in conjunction with a drawing application.

For example, as shown in state (A) of Fig. 14, suppose that a desired color is selected from a palette object (called the palette hereunder) 250 and that the finger touching the display surface is used to draw in the selected color. In this case, when a new proximate finger detection position is detected, the palette 250 displayed in the bottom right corner of the display region 200 may be moved to the top left corner of the display area 200 where there exists the newly detected proximate finger detection position. This allows the finger in the newly detected proximate finger detection position to manipulate the palette 250. Preferably, an object 250a in the selected color may be displayed larger than the other objects in the other colors.

Thereafter, the finger in the newly detected proximate finger detection position manipulates the palette 250. If the finger touches another object 250b in another color, the color of the line with which to draw may be changed to the color of the new object 250b. In this manner, the changeover of attributes in object manipulation can be made quickly.

In the foregoing example, the color in which to draw lines was shown selected by the finger in contact with the newly detected proximate finger detection position. However, this is not limitative of the present disclosure. When the object for performing manipulations associated with the currently executed function is displayed in the newly detected proximate finger detection position, the speed of manipulation can be enhanced and manipulation performance can be boosted.

### [Tracking by use of the proximate finger]

As described above, the information processing apparatus 100 embodying the present disclosure causes the target object to appear in the proximate finger detection position. This eliminates the need for the user to move his or her finger to the object display position for causing the object to appear, thereby alleviating the operation load involved. In this case, if the finger having caused the object 210 of interest to appear leaves the display region of the currently displayed object 210 (i.e., object display region), then it may become difficult to manipulate the object 210 that has been expressly displayed close to the finger. This bottleneck can be bypassed by the disclosed information processing apparatus 100 allowing the object 210 to follow the finger movement when the finger having made the object 210 displayed is detached farther than a predetermined distance from the object display region.

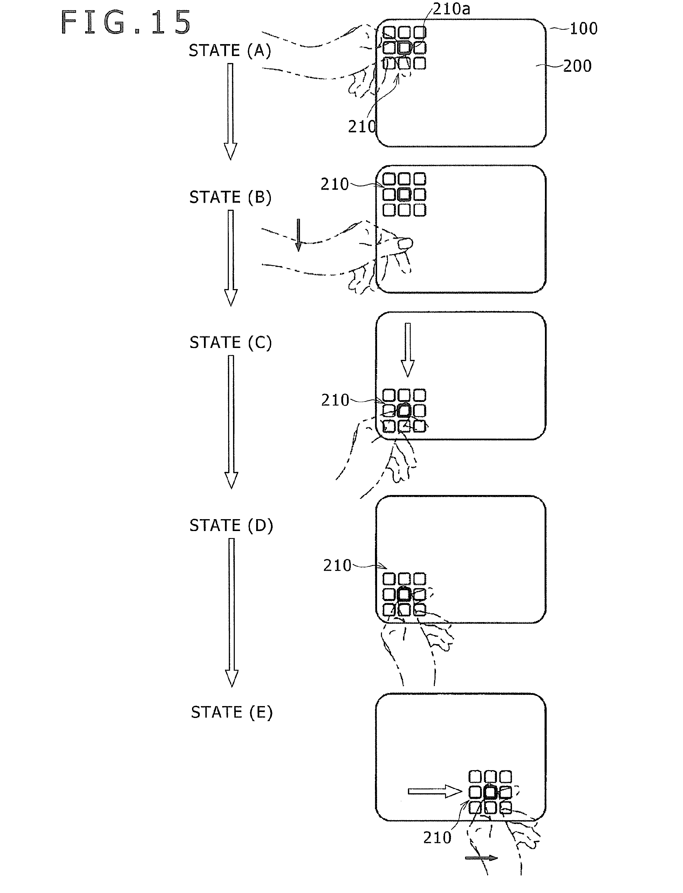

Fig. 15 shows how the display position of the object 210 may be changed in keeping with the movement of the finger that caused the object 210 to appear. Suppose that as shown in state (A) of Fig. 15, the object 210 has appeared in the proximate finger detection position identified by the position information acquisition portion 120. In this case, the object 210 is displayed in the top left corner of the information processing apparatus 100 because the proximate finger detection position is found in the top left corner of the apparatus.

Suppose further that the finger having made the object 210 appear is moved toward the bottom left corner of the apparatus while maintaining tactile contact with the display surface. In this case, when the display control portion 130 detects the movement of the finger in question from the position information input from the position information acquisition portion 120, the display control portion 130 moves the object 210 towards the bottom left corner of the apparatus in a manner tracking the finger movement, as shown in state (C) of Fig. 15.

At this point, the object 210 may be moved to track the finger only if the speed of the moving finger is lower than a predetermined speed. If the speed of the finger is higher than the predetermined speed, there is a high possibility that the user has intentionally moved the finger to manipulate an object located in the moving direction, for example. In such a case, the object 210 displayed in the first proximate finger detection position may be kept unmoved. This arrangement prevents the object 210 from getting moved in a manner unintended by the user.

Alternatively, if the speed of the moving finger is higher than the predetermined speed, the display control portion 130 may determine that the object 210 made to appear by that finger is not to be manipulated, and may hide the object 210 accordingly from the display region 200. As another alternative, upon elapse of a predetermined time period following withdrawal of the finger from the proximate region, the object 210 may be hidden from the display region 200.

If the way the information processing apparatus 100 is held is changed from state (C) to state (D), the display position of the object 210 is moved in a manner tracking the finger that caused the object 210 to appear so that the object 210 is kept manipulable by the finger in question. When the finger is moved from the bottom left corner of the apparatus to the bottom right corner, the display control portion 130 moves the object 210 to the bottom right corner by tracking the finger, as shown in state (E) of Fig. 15.

As described above, the display position of the object 210 is changed in a manner tracking the movement of the finger that made the object 210 appear. That means the object 210 is moved in keeping with the proximate finger detection position even when the information processing apparatus 100 is passed from one hand to the other or held in a different manner from one moment to another, whereby the object 210 is kept easily manipulable. Alternatively, the display position of the object 210 tracking the finger movement may be determined in such a manner that the center of the object 210 (e.g., sub-object 210a in the example of Fig. 15) coincides with the proximate finger detection position. As another alternative, the target positions to which to move the object 210 may be set to disperse to a certain extent so that the object 210 may be displayed in the target position closest to the proximate finger detection position.

Alternatively, there may be provided a dead region where the object 210 cannot be moved in a manner tracking the finger movement in the display region 200. For example, there may be a case in which, if information other than the object 210 is displayed in the display region 200, then moving the finger into the region where that information is displayed may cause the object 210 to appear in that region in a manner overlapping with the currently displayed information thereby making the information difficult to look up. This bottleneck may be circumvented by establishing a dead region where the object 210 is kept from being displayed, whereby the movable range of the object 210 may be delimited.

As yet another alternative, it is also possible explicitly to move the object 210 displayed in the display region 200 by drag-and-dropping the object 210 into a desired position for display.

The workings of the information processing apparatus 100 embodying the present disclosure and the display control process performed thereby were described above. According to the embodiment of the disclosure, a GUI display appears in the proximate finger detection position where the user's finger approaches the display surface. This allows the user to recognize the GUI behavior before his or her finger comes into contact with the display surface. The user is thus reminded of upcoming menu items and presently available manipulations so that the user can manipulate the apparatus smoothly and securely. Thanks to the easy-to-manipulate GUI displayed in keeping with the proximate finger detection position, the user's operation load is alleviated. When the finger that caused the GUI to appear is moved, the GUI corresponding to the finger is moved in a manner tracking the finger movement, which further alleviates the user's operation load.

Also according to the embodiment of the present disclosure, a plurality of proximate finger detection positions can be detected. This means that the currently displayed GUI can be divided for additional manipulations or that the currently executed function may be assisted by further manipulations. These features alleviate the user's operation load. Because multiple fingers are made usable for simultaneous manipulations by the embodiment, manipulation velocity can be boosted.

It is to be understood that while the disclosure has been described in conjunction with specific embodiments with reference to the accompanying drawings, it is evident that many alternatives, modifications and variations will become apparent to those skilled in the art in light of the foregoing description. Accordingly, it is intended that the present disclosure embrace all such alternatives, modifications and variations as fall within the spirit and scope of the appended claims.

In so far as embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present disclosure contains subject matter related to that disclosed in Japanese Priority Patent Application JP 2010-199637 filed in the Japan Patent Office on September 7, 2010, the entire content of which is hereby incorporated by reference.

## Claims

1. An information processing apparatus comprising:
a position information acquisition portion configured to acquire position information about an operating body relative to a display surface of a display portion displaying an object; and
a display control portion configured such that if said operating body is positioned inside a proximate region between said display surface and a position withdrawn from said display surface by a predetermined distance, said display control portion displays said object in that position on said display portion which corresponds to said operating body.

2. The information processing apparatus according to claim 1, wherein, if said operating body is moved out of said proximate region, said display control portion hides said object displayed when said operating body was positioned inside said proximate region.

3. The information processing apparatus according to claim 1, wherein, if said operating body is again positioned inside said proximate region before a predetermined time period elapses following the movement of said operating body out of said proximate region, said display control portion displays said object again in that position on said display portion which corresponds to said operating body in accordance with the position information about said operating body being again positioned inside said proximate region.

4. The information processing apparatus according to claim 1, wherein said position information acquisition portion is capable of acquiring the position information about a plurality of operating bodies;
based on the position information about a first operating body positioned inside said proximate region, said display control portion first displays said object in that position on said display portion which corresponds to said first operating body; and
if a second operating body is positioned inside said proximate region with said object being displayed on said display portion, said display control portion displays part of said object in that position on said display portion which corresponds to said second operating body, based on the position information about said second operating body.

5. The information processing apparatus according to claim 1, wherein said position information acquisition portion is capable of acquiring the position information about a plurality of operating bodies;
based on the position information about a first operating body positioned inside said proximate region, said display control portion first displays said object in that position on said display portion which corresponds to said first operating body; and
if a second operating body is positioned inside said proximate region while said first operating body is in contact with one of sub-objects making up said object, said display control portion displays a related object in that position on said display portion which corresponds to said second operating body, said related object being related to said sub-object in contact with said first operating body.

6. The information processing apparatus according to claim 1, wherein said position information acquisition portion is capable of acquiring the position information about a plurality of operating bodies;
based on the position information about a first operating body positioned inside said proximate region, said display control portion first displays a plurality of objects in those positions on said display portion which correspond to said first operating body; and
if a second operating body is positioned inside said proximate region with said plurality of objects being displayed on said display portion, said display control portion displays at least one of said plurality of objects in that position on said display portion which corresponds to said second operating body.

7. The information processing apparatus according to claim 1, wherein, if said operating body is moved at speeds lower than a predetermined speed inside said proximate region, said display control portion moves the display position of said object in keeping with the movement of said operating body.

8. An information processing method comprising:
causing a position information acquisition portion to acquire position information about an operating body relative to a display surface of a display portion displaying an object; and
if said operating body is positioned inside a proximate region between said display surface and a position withdrawn from said display surface by a predetermined distance, then causing a display control portion to display said object in that position on said display portion which corresponds to said operating body.

9. A computer program for causing a computer to function as an information processing apparatus comprising:
a position information acquisition portion configured to acquire position information about an operating body relative to a display surface of a display portion displaying an object; and
a display control portion configured such that if said operating body is positioned inside a proximate region between said display surface and a position withdrawn from said display surface by a predetermined distance, said display control portion displays said object in that position on said display portion which corresponds to said operating body.
